# EUROPÄISCHE PATENTSCHRIFT

(11) **EP 0 612 993 B1**
(45) Veröffentlichungstag und Bekanntmachung des Hinweises auf die Patenterteilung: **17.03.1999**
(21) Anmeldenummer: 93250292.5
(22) Anmeldetag: 28.10.1993
(51) Int. Cl.: G01N 1/12, C21C 5/46, G01N 1/00, G01K 1/14

(54) **Vorrichtung zum Wechseln von Mess- und/oder Probensonden**
Device for exchanging measurement or sampling probes
Dispositif pour le changement de sondes de mesure ou de prélèvement

(30) Priorität: 24.02.1993 DE 4306332
(43) Veröffentlichungstag der Anmeldung: 31.08.1994
(73) Patentinhaber: MANNESMANN Aktiengesellschaft, 40213 Düsseldorf (DE)
(72) Erfinder: Löhndorf, Wolfgang, D-47809 Kempen (DE); Schöck, Hans-Wilhelm, D-47239 Duisburg (DE)
(74) Vertreter: Meissner, Peter E., Dipl.-Ing.

(56) Entgegenhaltungen:
- EP-A- 0 092 636
- EP-A- 0 113 653
- FR-A- 2 410 236
- US-A- 4 058 017
- STAHL UND EISEN, Bd.105, Nr.21, Oktober 1985, DUSSELDORF DE Seiten 1081 - 1085 PRIMAS ET AL. 'Einsatz von Sublanze und Prozessmodellen bei der Voest-Alpine'

## Beschreibung

Die vorliegende Erfindung betrifft eine Vorrichtung zum Wechseln von Meß- und/oder Probensonden, die nach der Entnahme aus einem Sondenmagazin auf ein am unteren Ende einer Sublanze angeordnetes Kontaktrohr aufsteckbar sind.

Der Einsatz von Einrichtungen zum automatischen Bestücken von Meßlanzen mit speziellen Meßsonden ist bereits bekannt.

So ist beispielsweise aus der EP-PS-0.092.636 ein Verfahren und eine Vorrichtung zum Handhaben von Meß- bzw. Probennahme-Sondenrohren beim Metallerzeugen bekannt, bei dem das Sondenrohr horizontal aus einem Sondenmagazin entnommen, vertikal an einer Meßlanze befestigt, in das Metallbad abgesenkt, anschließend angehoben und entsorgt wird.

Dazu wird das Sondenrohr aus dem Sondenmagazin mittels einer Quertransporteinrichtung entnommen und auf einer Transporteinrichtung in den Manipulator befördert. Zu diesem Zeitpunkt befindet sich das Sondenrohr in einer horizontalen Position. Der Manipulator wird deshalb nach Aufnahme des Sondenrohres in eine vertikale Position verschwenkt, so daß sich das Sondenrohr nunmehr genau in der vertikalen Meßachse befindet, auf der im Betrieb auch die Meßlanze heb- und senkbar befestigt ist.

Bei diesem Verfahren ist es jedoch von Nachteil, daß das mehrmalige Übergeben des Sondenrohres von dem Sondenmagazin zum Manipulator und das anschließende Verschwenken des Sondenrohres in die vertikale Richtung einen relativ langen Zeitraum beansprucht.

Durch die Weiterentwicklung der Prozeßautomation bei der Oxygenstahlerzeugung werden die Anforderungen an alle Komponenten der Gesamtanlagen hinsichtlich Schnelligkeit und Genauigkeit aber immer größer. Die bekannten Einrichtungen können diesen Anforderungen nicht mehr entsprechen.

Aus der EP-A-0113653 ist eine Vorrichtung zum Wechseln von Meß- und/oder Probensonden bekannt, die nach der Entnahme aus einem Sondermagazin auf ein am unteren Ende einer Sublanze angeordnetes Kontaktrohr aufsteckbar sind, wobei ein Greifer zum Erfassen einer Sonde vorgesehen ist, welcher über ein Gelenk mit einem Ausleger/Arm verbunden ist. Dieser ist mittels einer Antriebseinheit verschiebbar, wobei diese Antriebseinheit beweglich auf einer verschiebbaren, drehbaren und höhenverstellbaren Einrichtung angeordnet ist und zur Steuerung der Vorrichtung eine entsprechende Steuereinrichtung vorgesehen ist.

Der Erfindung liegt daher die Aufgabe zu Grunde, ein System zu entwickeln, das den Sondenwechsel, für z.B. eine Wiederholung am Blasende, in kürzester Zeit ermöglicht. Desweiteren soll das System so ausgelegt sein, daß eine Nachrüstung von bereits bestehenden Anlagen ohne Änderung der bestehenden Systeme möglich ist.

Gelöst wird die Aufgabe durch die Merkmale im kennzeichnenden Teil des Anspruchs 1. Weitere vorteilhafte Ausgestaltungen der Erfindung sind in den Unteransprüchen offenbart.

Erfindungsgemäß ist die Vorrichtung zum Wechseln der Meß- und/oder Probensonden mit 6 Freiheitsgraden ausgerüstet, so daß ein Umfahren von räumlich angeordneten Konstruktionen möglich ist. Darüberhinaus ist die Vorrichtung mit Antrieben ausgestattet, die die Gesamtzykluszeit für einen Sondenwechsel in der geforderten kurzen Zeit ermöglichen.

Dabei wird vorteilhafterweise von der Tatsache Gebrauch gemacht, daß die Arbeitsvorgänge vom Zeitpunkt der Entnahme der Sonden aus dem Sondenmagazin bis hin zum Einsetzen der verschwenkten Sonden in die Meßlanzen innerhalb eines einzigen Arbeitsschritts erfolgen können.

Weitere Vorteile und Anwendungsmöglichkeiten der vorliegenden Erfindung ergeben sich aus der nachfolgenden Beschreibung anhand der beiliegenden Zeichnung.

Es zeigt:
Fig.1 eine Ansicht des Einsatzbereichs einer erfindungsgemäßen Vorrichtung mit Abgaskessel, Blaslanze, Blaslanzendom, Sublanze und Sublanzendom;
Fig.2 eine Draufsicht zu Figur 1; und
Fig.3 eine Seitenansicht zu Figur 1.

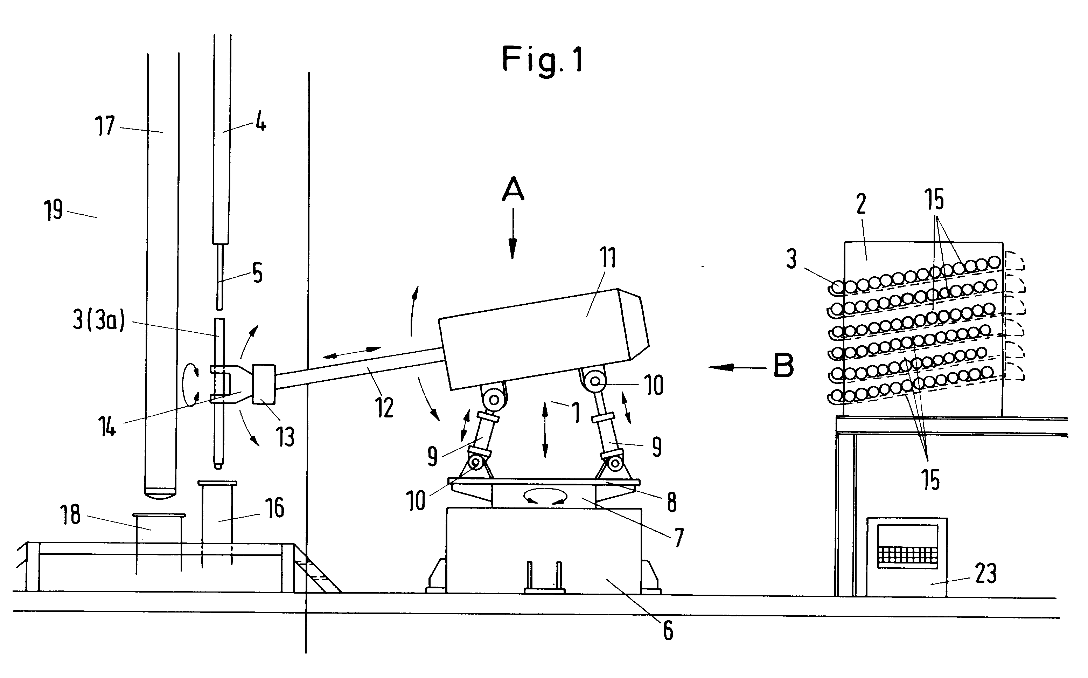

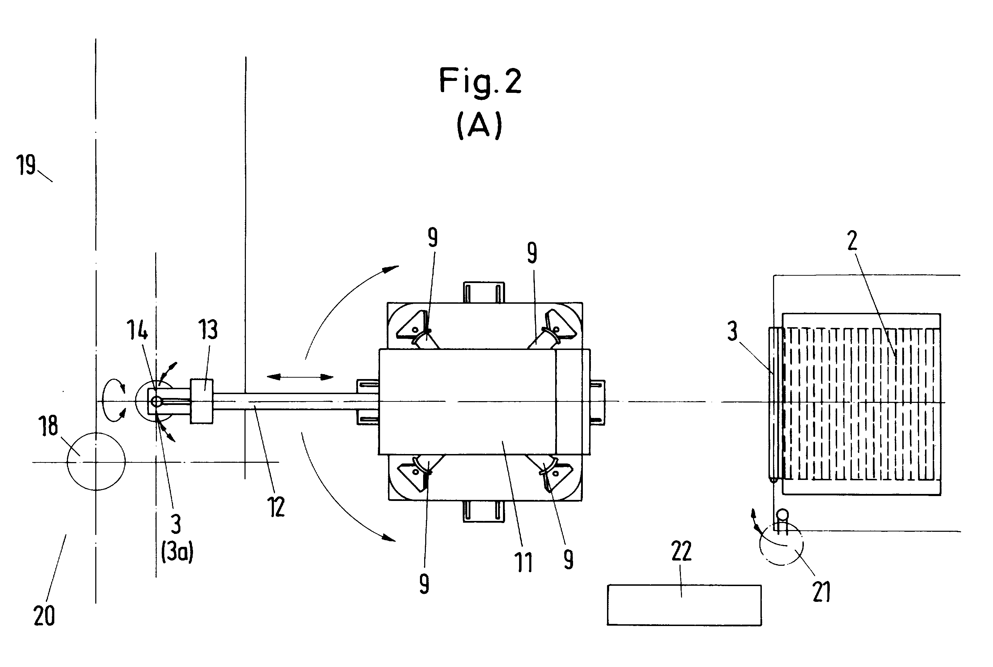

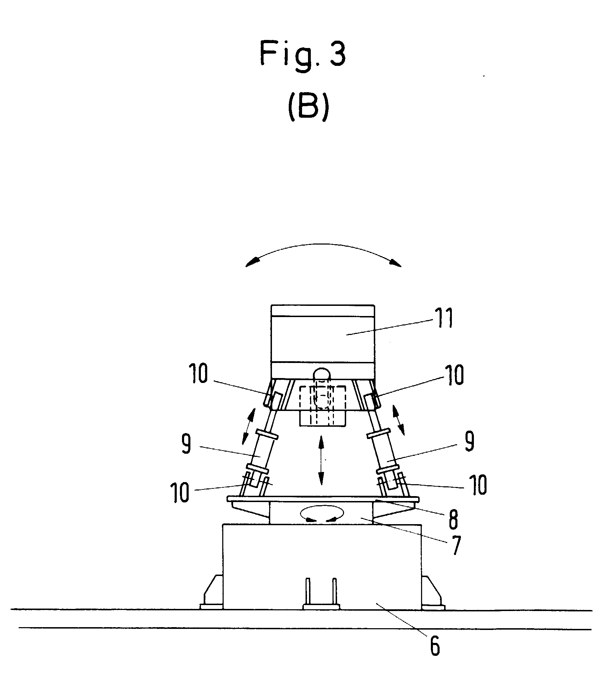

Gemäß den Fig.1 bis 3 werden die für eine spezielle Meßung erforderlichen Sonden 3 in dem Sondenmagazin 2 in entsprechenden Kanälen 15 bevorratet.

Mit dem vom Leitstand aus gegebenen Befehl für eine bestimmte Meßung läuft ein Aufsteckprogramm ab, wobei die Antriebe der Hub- und Dreheinheit 7, des Gelenks 13 sowie des Auslegers 12 durch die Steuereinheit 23 aktiviert werden und die Vorrichtung 1 die entsprechende Sonde 3 anfährt. Danach werden die mit dem Gelenk 13 verbundenen Greifer 14 geschlossen.

Durch die überlagerten Bewegungen der Kolben-Zylindereinheiten 9, der Antriebseinheit 11 zum Teleskopieren des Auslegers 12 sowie des Gelenks 13 wird die Sonde 3 in horizontaler Lage aus dem Magazin 2 entnommen und in die vertikale Position gebracht.

Anschließend schwenkt die Hub- Dreheinheit 7 unter gleichzeitigem Teleskopieren des Auslegers 12 zur Sondenaufsteckposition. Die Lager 10 der Kolben-Zylindereinheiten 9 sind so ausgelegt, daß die Schwenkbewegungen beim Aus-bzw. Einfahren der Kolben-Zylindereinheiten aufgenommen werden können.

Hierbei ist entscheidend, daß durch die Kombination von Hub- Dreheinheit 7, Antriebseinheit zum Teleskopieren 11 des Auslegers 12 und des Gelenks 13 alle räumlichen Punkte im Bereich des Drehkreises der Wechselvorrichtung an- bzw. umfahren werden können. Nach Erreichen der Aufsteckposition kann die Sonde 3 entweder durch die Hubeinheit 7 oder durch die Kolben- Zylindereinheiten 9 unter gleichzeitigem Neigen des Gelenks 13 auf das Kontaktrohr 5 der Sublanze 4 aufgesteckt werden.

Durch den Umstand, daß jede der Kolben- Zylindereinheiten 9, der Drehtisch 8, die Antriebseinheit 11, der Ausleger 12, das Gelenk 13 sowie der Greifer 14 jeweils unabhängig voneinander durch die Steuereinrichtung 23 steuerbar sind, wird erreicht, daß die Sonden 3 unabhängig von der Ausrichtung der Meßlanze 4 jeweils sicher und fehlerlos auf das Kontaktrohr aufgesteckt werden können.

Bei einer reinen Temperaturmeßung wird die nach der Meßung verbrauchte Sonde 3a vom Kontakt rohr 5 der Sublanze 4 abgezogen und durch den Sublanzendom 16 in den Konverter 20 entsorgt.

Bei Einsatz von Temperatur-Probe-Sonden wird die verbrauchte Sonde 3a vom Kontaktrohr 5 abgezogen und durch die Vorrichtung 1 zur Trennstation 21 gebracht, wo der untere Teil der Sonde, in dem sich die Probekammer befindet, von der Sonde abgetrennt und über ein Fallrohr zur Konverterbühne transportiert wird. Die restliche Sonde wird anschließend entweder durch den Sublanzendom 16 in den Konverter 20 entsorgt oder in eine dafür vorgesehene Entsorgungsstation 22 abgeworfen.

Durch die freiprogrammierbare Steuerung 23 der Vorrichtung 1 können alle Raumkoordinaten nach dem "Teach in" Verfahren eingegeben werden und anschließend im Echt-Zeit Programm abgefahren werden. Die Zentralisierung aller Steuerbefehle in der Steuerung 23 der Vorrichtung 1 ermöglicht es, die Störanfälligkeit der bisher bekannten Systeme weitgehendst auszuschalten.

## Patentansprüche

1. Vorrichtung zum Wechseln von Meß- und/oder Probensonden (3), die nach der Entnahme aus einem Sondenmagazin (2) auf ein am unteren Ende einer Sublanze (4) angeordnetes Kontaktrohr (5) aufsteckbar sind, wobei ein Greifer (14) zum Erfassen einer Sonde (3) vorgesehen ist, welcher über ein Gelenk (13) mit einem Ausleger (12) mittels einer Antriebseinheit (11) verschiebbar ist,
dadurch gekennzeichnet,
daß die Antriebseinheit (11) durch wenigstens drei Kolben-Zylinder-Einheiten (9) beweglich auf einem drehbaren und höhenverstellbaren Tisch (8) angeordnet ist, daß zur Steuerung der Vorrichtung (1) eine Steuereinrichtung (23) vorgesehen ist und daß jede Kolben-Zylinder-Einheit (9) separat durch die Steuereinrichtung (23) steuerbar ist.

2. Vorrichtung nach Anspruch 1,
dadurch gekennzeichnet,
daß die Antriebseinheit (11) im Bereich ihrer Ecken über vier Kolben-Zylinder-Einheiten (9) beweglich mit dem Tisch (8) verbunden ist.

3. Vorrichtung nach Anspruch 1 oder 2,
dadurch gekennzeichnet,
daß der Tisch (8), die Antriebseinheit (11), der Ausleger (12), das Gelenk (13) sowie der Greifer (14) jeweils unabhängig voneinander durch die Steuereinrichtung (23) steuerbar sind.

4. Vorrichtung nach einem der Ansprüche 1 bis 3,
dadurch gekennzeichnet,
daß das Sondenmagazin (2) eine Anzahl von Sondenkanälen (15) zur Aufnahme der Sonden (3) aufweist.

## Claims

1. Device for changing measuring and/or sampling probes (3), which after removal from a probe magazine (2) are mountable on a contact tube (5) disposed at the lower end of an immersion lance (4), wherein a gripper (14) is provided for grasping a probe (3), which gripper is displaceable via a hinge (13) with a cantilever (12) by means of a drive unit, characterised in that the drive unit (11) is disposed by at least three piston cylinder units (9) movably on a rotary and height-adjustable table (8), in that for controlling the device (1) a control device (23) is provided, and in that each piston cylinder unit (9) is controllable separately by the control device (23).

2. Device according to claim 1, characterised in that the drive unit (11) is connected in the region of its corners movably to the table (8) via four piston cylinder units (9).

3. Device according to claim 1 or 2, characterised in that the table (8), the drive unit (11), the cantilever (12), the hinge (13) and the gripper (14) are each controllable independently of one another by the control device (23).

4. Device according to one of claims 1 to 3, characterised in that the probe magazine (2) has a number of probe grooves (15) for receiving the probes (3).

## Revendications

1. Dispositif pour changer des sondes (3) d'échantillonnage et/ou de mesure qui, après enlèvement d'un magasin de sondes (2), peuvent être enfilées sur un tube de contact (5) agencé à l'extrémité inférieure d'une lance (4), une pince (14) étant prévue pour saisir les sondes (3), laquelle peut être déplacée, par l'intermédiaire d'une articulation (13), avec un bras (12) au moyen d'une unité d'entraînement (11),
caractérisé en ce que l'unité d'entraînement (11) est agencée de façon mobile sur une table (8) pouvant tourner et pouvant être réglée en hauteur par au moins trois vérins (9), en ce que, pour commander le dispositif (1), il est prévu un dispositif de commande (23), et en ce que chaque vérin (9) peut être commandé de façon séparée par le dispositif de commande (23).

2. Dispositif selon la revendication 1,
caractérisé en ce que l'unité d'entraînement (11) est reliée, dans la zone de ses coins, par l'intermédiaire de quatre vérins (9), de façon mobile à la table (8).

3. Dispositif selon la revendication 1 ou 2,
caractérisé en ce que la table (8), l'unité d'entraînement (11), le bras (12), l'articulation (13), ainsi que la pince (14) peuvent être commandés, à chaque fois, indépendamment les uns des autres, par l'unité de commande (23).

4. Dispositif selon une des revendications 1 à 3,
caractérisé en ce que le magasin de sondes (2) présente une pluralité de canaux (15) pour recevoir les sondes (3).
